# EUROPEAN PATENT SPECIFICATION

(11) **EP 4 614 776 B1**
(45) Date of publication and mention of the grant of the patent: **29.07.2026**
(21) Application number: 25160655.4
(22) Date of filing: 27.02.2025
(51) Int. Cl.: H02K 5/18, H02K 5/20, H02K 9/19, H02K 11/33

(54) **INVERTER-INTEGRATED MOTOR**
MOTOR MIT INTEGRIERTEM UMRICHTER
MOTEUR À ONDULEUR INTÉGRÉ

(30) Priority: 07.03.2024 JP 2024034564
(43) Date of publication of application: 10.09.2025
(73) Proprietor: Suzuki Motor Corporation, Shizuoka 432-8611 (JP)
(72) Inventor: YAMADA, Tomohiro, 432-8611 Hamamatsu-shi, Shizuoka (JP)
(74) Representative: Haseltine Lake Kempner LLP

(56) References cited:
- WO-A1-2015/145809
- US-A1- 2021 143 499
- US-A1- 2022 069 663
- US-B2- 7 102 260

## Description

### TECHNICAL FIELD

The present invention relates to an inverter-integrated motor.

### BACKGROUND ART

In the related art, an inverter-integrated motor has been known in which a motor and an inverter are accommodated in a single motor case (see, for example, Patent Literature 1). In the inverter-integrated motor described in Patent Literature 1, the motor is accommodated in a lower case of the motor case, and the inverter is accommodated in an upper case of the motor case. A first cooling flow path is formed in the lower case to surround a stator of the motor, and a second cooling flow path is formed in the upper case along a lower surface of the inverter. The second cooling flow path is connected to a downstream side of the first cooling flow path, and a cooling flow path of the motor and the inverter is shared.

US 2022/0069663 A1 discloses a motor including a motor body having a rotor that is rotatable around an axis and a stator that surrounds the rotor; a casing that has a cylinder portion and an inverter box, the cylinder portion forming a cylindrical shape extending in an axial direction and surrounding the motor body, internally having a cooling water channel that extends in a C shape in a circumferential direction, and being used for allowing cooling water to flow, the inverter box overhanging on both sides of the cylinder portion in a tangential direction on an outer peripheral side of the cooling water channel in the cylinder portion; and an inverter that is housed in the inverter box and has a switching element disposed on a surface of the cylinder portion facing radially outward in the inverter box.

US 7102260 B2 discloses a drive unit comprising an electric motor, a drive unit casing accommodating therein the electric motor, an inverter that controls the electric motor, and a flow passage of a refrigerant that cools the inverter. The inverter is mounted on a heat sink and mounted to the drive unit casing with a space defined, and the space is communicated to the flow passage of the refrigerant. The heat sink comprises fins, and the drive unit casing comprises fins, the both fins being apart from each other.

### CITATION LIST

### PATENT LITERATURE

Patent Literature 1: JP6589095

### SUMMARY OF INVENTION

### TECHNICAL PROBLEM

However, in the inverter-integrated motor described in Patent Literature 1, the upper case is overlapped with the lower case, and the cooling flow path is formed in each case, so that the size of the motor case is increased. In addition, in the lower case, the first cooling flow path cannot completely surround the stator, and the cooling performance of the motor deteriorates.

The present invention has been made in view of such points, and an object thereof is to provide an inverter-integrated motor capable of improving cooling performance of a motor while implementing reduction in size of a motor case.

### SOLUTION TO PROBLEM

The scope of the present invention is defined by the appended claims.

### ADVANTAGEOUS EFFECTS OF INVENTION

With the inverter-integrated motor according to an aspect of the present invention, the common flow path is formed between the inner case and the heat sink, so that the motor and the inverter can be brought close to each other to reduce the size of the motor case. In addition, cooling water flows through the common flow path, so that heat of the motor is conducted to the inner case and is dissipated into the cooling water through the plurality of cooling ribs, and heat of the inverter is conducted to the heat sink and dissipated into the cooling water through the plurality of cooling fins, which improves the cooling performance of the motor and the inverter.

### BRIEF DESCRIPTION OF DRAWINGS

FIG. 1 is a side view of an inverter-integrated motor according to the present embodiment.
FIG. 2 is a front view of the inverter-integrated motor according to the present embodiment.
FIG. 3 is a cross-sectional view of the inverter-integrated motor in FIG. 1 taken along a line A-A.
FIG. 4 is a cross-sectional view of the inverter-integrated motor in FIG. 2 taken along a line B-B.
FIG. 5Ais a side view of an inner case according to the present embodiment, and FIG. 5B is a top view of the inner case according to the present embodiment.
FIG. 6 is a perspective view of a heat sink according to the present embodiment.
FIG. 7 is a view illustrating a cooling structure of a motor and an inverter according to the present embodiment.

### DESCRIPTION OF EMBODIMENTS

An inverter-integrated motor according to an aspect of the present invention includes a motor case in which an inner case is accommodated inside an outer case. A motor is installed inside the inner case, and a motor shaft of the motor protrudes outside the case. An inverter and a heat sink are installed inside the outer case, rotation of the motor is controlled by the inverter, and the inverter is cooled by the heat sink. A plurality of cooling ribs are provided on an outer circumferential surface of the inner case, and a plurality of cooling fins are provided on a lower surface of the heat sink of the inverter. The lower surface of the heat sink faces the outer circumferential surface of the inner case, and a common flow path is formed by the plurality of cooling ribs and the plurality of cooling fins, so that the motor and the inverter are brought close to each other to reduce the size of the motor case. In addition, cooling water flows through the common flow path, so that heat of the motor is conducted to the inner case and is dissipated into the cooling water through the plurality of cooling ribs, and heat of the inverter is conducted to the heat sink and dissipated into the cooling water through the plurality of cooling fins, which improves the cooling performance of the motor and the inverter.

### Embodiment

In a general inverter-integrated motor, a motor unit and an inverter unit are individually formed. A cooling flow path is formed in each of the motor unit and the inverter unit, and by fixing the units together, the cooling flow paths in the units are connected in series. Since cases and the cooling flow paths of the units are formed independently, there is a defect that the motor size of the inverter-integrated motor is increased. Therefore, the present embodiment is to reduce the motor size by accommodating a motor and an inverter in a single motor case and sharing a part of a cooling flow path of the motor and the inverter.

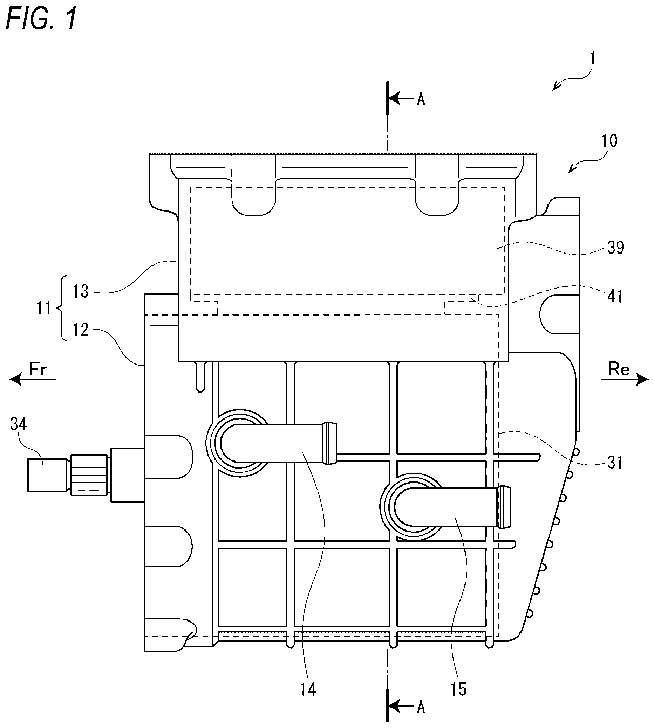

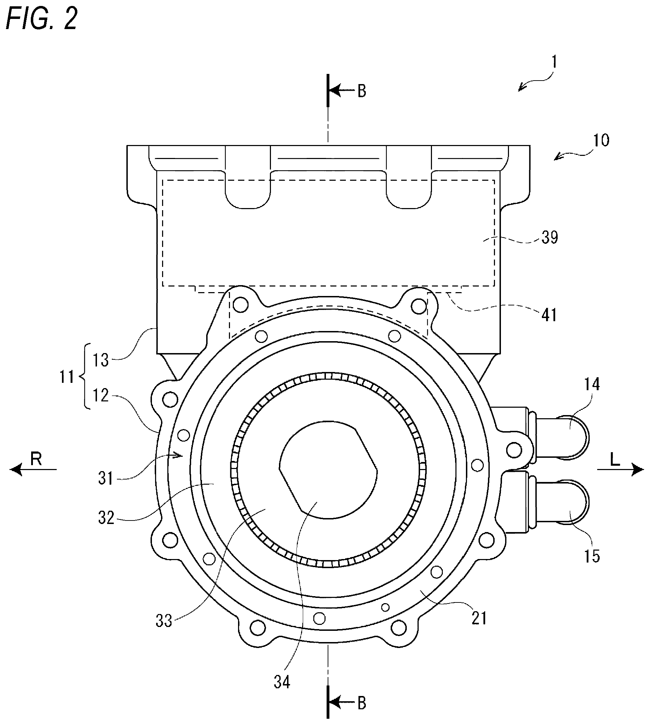

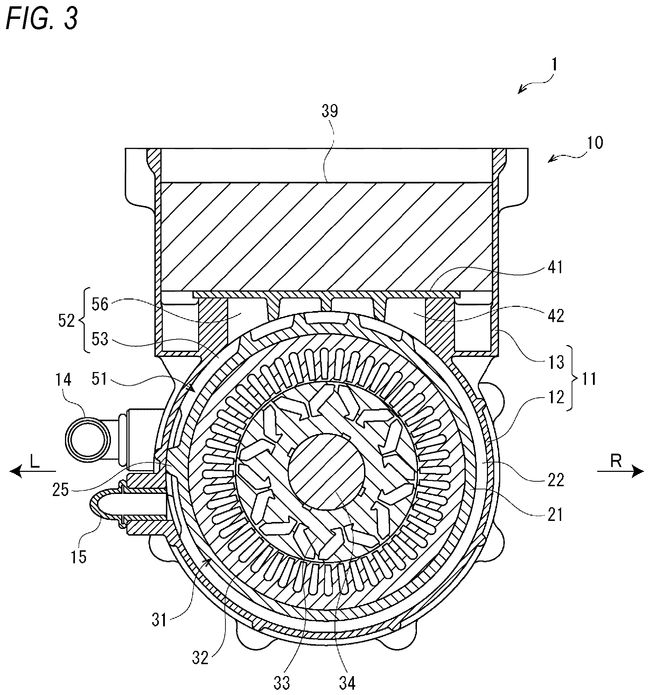

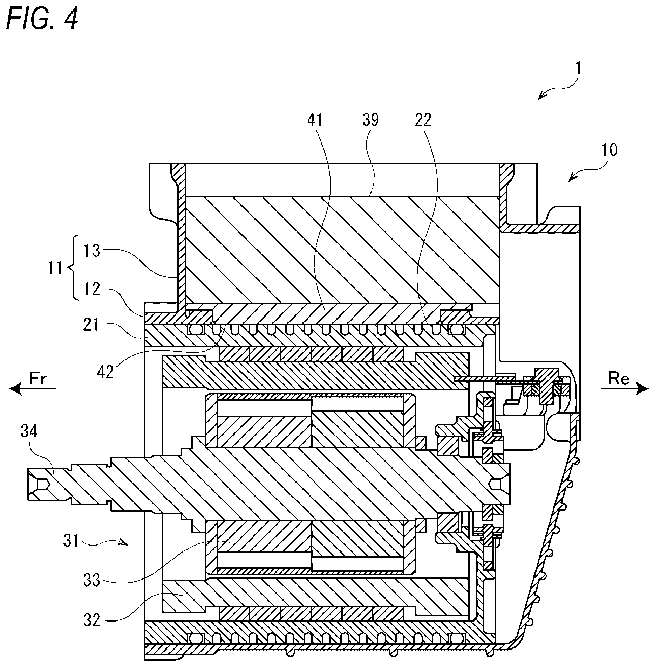

An inverter-integrated motor according to the present embodiment will be described below with reference to the accompanying drawings. FIG. 1 is a side view of the inverter-integrated motor according to the present embodiment. FIG. 2 is a front view of the inverter-integrated motor according to the present embodiment. FIG. 3 is a cross-sectional view of the inverter-integrated motor in FIG. 1 taken along a line A-A. FIG. 4 is a cross-sectional view of the inverter-integrated motor in FIG. 2 taken along a line B-B. In the following drawings, an arrow Fr indicates a front side, an arrow Re indicates a rear side, an arrow L indicates a left side, and an arrow R indicates a right side.

As illustrated in FIGS. 1 and 2, in an inverter-integrated motor 1, a motor 31 and an inverter 39 are installed inside a single motor case 10. In the motor case 10, an inner case 21 is accommodated inside an outer case 11. A lower side of the outer case 11 is a tubular portion 12 whose front surface is opened, and an upper side of the outer case 11 is a box-shaped portion 13 whose upper surface is opened. A bottom surface of the box-shaped portion 13 is largely opened, and a heat sink 41 is installed in the opening of the box-shaped portion 13. The opening of the box-shaped portion 13 is closed by the heat sink 41, so that the inside of the box-shaped portion 13 and the inside of the tubular portion 12 are partitioned by the heat sink 41.

The inner case 21 which is tubular is installed inside the tubular portion 12, and the motor 31 is installed inside the inner case 21. A stator 32 of the motor 31 is shrink-fitted inside the inner case 21, and a rotor 33 is rotatably installed inside the stator 32. A motor shaft 34 is fixed to a center of the rotor 33, and the motor shaft 34 protrudes forward from the inner case 21 (motor case 10). An inverter 39 is installed inside the box-shaped portion 13, and rotation of the motor 31 is controlled by the inverter 39. The inverter 39 is supported on an upper surface of the heat sink 41, and the inverter 39 is cooled by the heat sink 41.

A cooling flow path 51 (see FIGS. 3 and 4) is formed between the inner case 21 and the outer case 11 so as to surround the motor 31. An inlet pipe 14 and an outlet pipe 15 are attached to one side surface of the tubular portion 12 of the outer case 11. Cooling water is supplied from the inlet pipe 14 to an inlet of the cooling flow path 51, and the cooling water is discharged from an outlet of the cooling flow path 51 to the outlet pipe 15. The cooling flow path 51 is formed around the inner case 21 and at a lower side of the heat sink 41, and the motor 31 and the inverter 39 are effectively cooled while the cooling water passes around the inner case 21 and the lower surface of the heat sink 41.

As illustrated in FIGS. 3 and 4, a plurality of cooling ribs 22 are provided on an outer circumferential surface of the inner case 21, and top surfaces of the plurality of cooling ribs 22 are in contact with an inner circumferential surface of the tubular portion 12 of the outer case 11. The heat sink 41 is installed in the opening in the upper portion of the tubular portion 12, and the lower surface of the heat sink 41 faces the outer circumferential surface of the inner case 21. A plurality of cooling fins 42 are provided on the lower surface of the heat sink 41, and top surfaces of the plurality of cooling fins 42 protrude towards the inner case 21. The cooling flow path 51 is formed around the inner case 21 by the plurality of cooling ribs 22, and a common flow path 52 is formed in a part of the cooling flow path 51 by the plurality of cooling ribs 22 and the plurality of cooling fins 42.

Most of the cooling ribs 22 extend along the circumferential direction of the inner case 21, but a part of the cooling ribs 22 facing the heat sink 41 extends along an axial direction of the inner case 21. In addition, most of the cooling fins 42 extend along the circumferential direction of the inner case 21, but a part of the cooling fins 42 extend along the axial direction of the inner case 21. This part of the cooling ribs 22 and this part of the cooling fins 42 are arranged to be displaced in the circumferential direction. Therefore, in the common flow path 52 between the inverter 39 and the motor 31, the cooling water flows between the inner case 21 and the heat sink 41.

In this manner, the common flow path 52 that simultaneously cools the motor 31 and the inverter 39 is formed between the inner case 21 and the heat sink 41. Separate flow paths for the inner case 21 and the heat sink 41 become unnecessary, so that the motor 31 and the inverter 39 are brought close to each other to reduce the size of the motor case 10. The common flow path 52 is divided into inter-rib flow paths 53 on an inner case 21 side and inter-fin flow paths 56 on a heat sink 41 side. In the common flow path 52, the cooling performance of the motor 31 and the inverter 39 is adjusted by heights of the plurality of cooling ribs 22 and the plurality of cooling fins 42, a height dimension of the flow path does not become larger than necessary, and the size of the motor case 10 is reduced.

A partition wall 25 that partitions the cooling flow path 51 into upper and lower portions is provided on one side portion of the outer circumferential surface of the inner case 21. The partition wall 25 extends along the axial direction of the inner case 21, and a top surface of the partition wall 25 is in contact with the inner circumferential surface of the tubular portion 12. The inlet pipe 14 is located above the partition wall 25, and a portion above the partition wall 25 is an upstream portion of the cooling flow path 51. The outlet pipe 15 is located below the partition wall 25, and a portion below the partition wall 25 is a downstream portion of the cooling flow path 51. In this manner, the cooling flow path 51 through which the cooling water flows clockwise in a cross-sectional view (rear view) is formed.

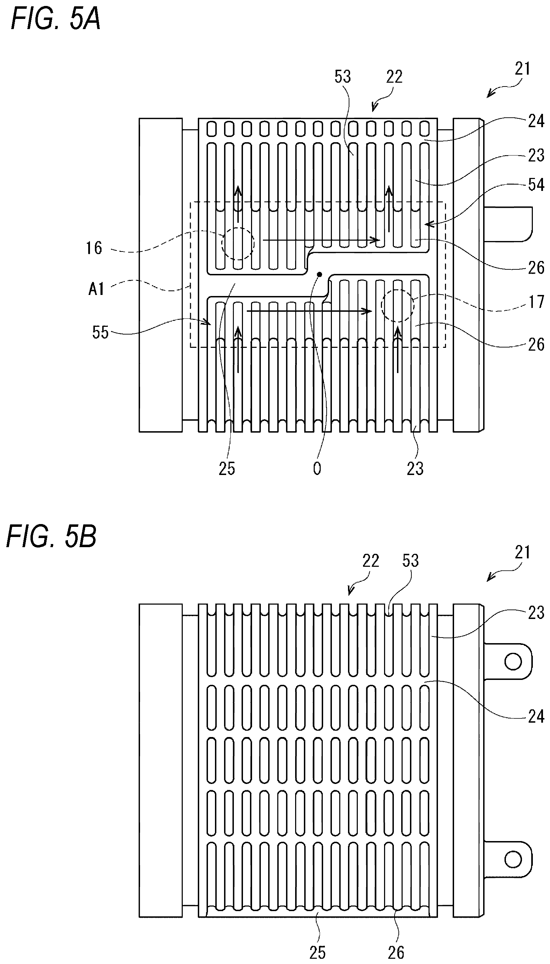

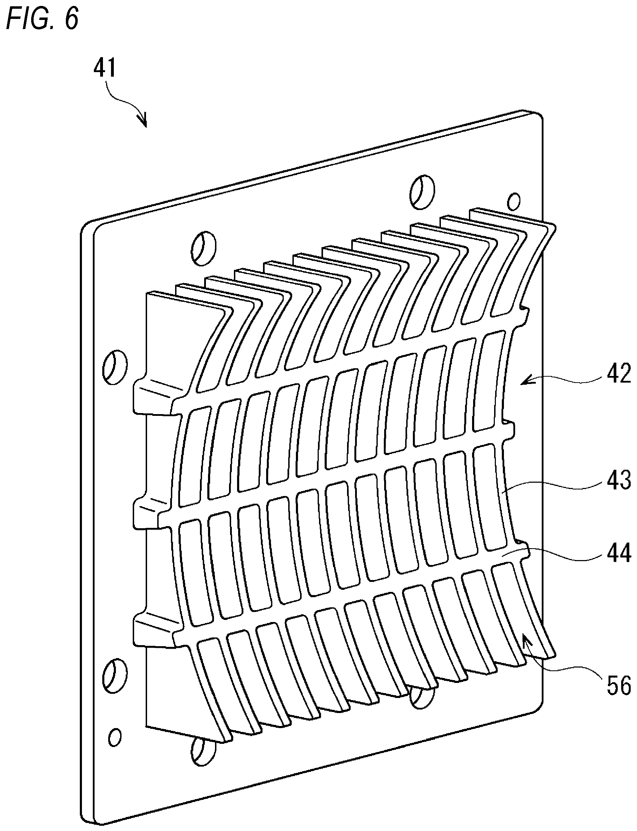

The inner case and the heat sink will be described with reference to FIGS. 5A to 6. FIG. 5A is a side view, and FIG. 5B is a top view of the inner case according to the present embodiment. FIG. 6 is a perspective view of the heat sink according to the present embodiment.

As illustrated in FIG. 5A and FIG. 5B, the plurality of cooling ribs 22 are provided on the outer circumferential surface of the inner case 21. The plurality of cooling ribs 22 include a plurality of vertical ribs 23 aligned in a motor axial direction and a plurality of transverse ribs 24 aligned in the circumferential direction perpendicular to the motor axial direction. The plurality of vertical ribs 23 extend in the circumferential direction, and the plurality of transverse ribs 24 are orthogonal to the plurality of vertical ribs 23. The plurality of vertical ribs 23 are formed over substantially the entire circumference of the inner case 21 except for vicinity of an inlet 16 and vicinity of an outlet 17 of the inner case 21, and the plurality of transverse ribs 24 are formed only on an upper portion of the inner case 21 facing the heat sink 41 (see FIG. 6).

In the inner case 21, the plurality of inter-rib flow paths 53, a branching flow path 54, and a merging flow path 55 are formed as the cooling flow path 51. The cooling water flows along the vertical ribs 23 by the plurality of inter-rib flow paths 53, and the motor 31 (see FIG. 2) is cooled over the entire circumference via the inner case 21. At the upstream portion of the cooling flow path 51, the branching flow path 54 extends in the motor axial direction, and the cooling water entering from the inlet 16 is branched into the plurality of inter-rib flow paths 53 by the branching flow path 54. At the downstream portion of the cooling flow path 51, the merging flow path 55 extends in the motor axial direction, and the cooling water in the plurality of inter-rib flow paths 53 is merged by the merging flow path 55 and discharged from the outlet 17.

The vertical ribs 23 and the transverse ribs 24 are formed at the same height as the outermost diameter of the inner case 21. The height of the vertical ribs 23 and the transverse ribs 24 is constant, so that a flow path cross-sectional area around the motor is constant, and cooling of the motor 31 having a large amount of heat is stabilized. At the upper portion of the inner case 21, the vertical ribs 23 and the transverse ribs 24 are arranged in a lattice shape, and the plurality of inter-rib flow paths 53 are partially blocked by the plurality of transverse ribs 24. The upper portion of the inner case 21 faces the heat sink 41, and an intermittent portion of the plurality of inter-rib flow paths 53 communicates with the plurality of inter-fin flow paths 56 (see FIG. 6) on the heat sink 41 side.

In the branching flow path 54 and the merging flow path 55, a plurality of reinforcing ribs 26 lower than the vertical ribs 23 are provided on the outer circumferential surface of the inner case 21 instead of the vertical ribs 23. The plurality of reinforcing ribs 26 are connected to the vertical ribs 23 and extend in the circumferential direction. The plurality of reinforcing ribs 26 are formed to have the same width as the vertical ribs 23. Since the inner case 21 is provided with ribs over the entire circumference, a thickness difference due to presence or absence of the ribs of the inner case 21 is small, and stress concentration due to shrinkage fitting of the stator 32 is alleviated. In addition, a surface area of the inner case 21 is increased by the plurality of reinforcing ribs 26 to improve the cooling performance of the motor 31.

By forming the plurality of reinforcing ribs 26 to be low, a sufficient gap is ensured between the plurality of reinforcing ribs 26 and the tubular portion 12 of the outer case 11, and the flow of the cooling water in the branching flow path 54 and the merging flow path 55 is less likely to be inhibited by the reinforcing ribs 26. Top surfaces of the plurality of vertical ribs 23 and the plurality of transverse ribs 24 are formed in a planar shape in the side view so as to be in contact with an inner circumferential surface of the outer case 11, and top surfaces of the plurality of reinforcing ribs 26 are formed in a rounded round shape in the cross-sectional view so as not to disturb the flow of the cooling water. A flow path width of the plurality of inter-rib flow paths 53 is equal to or less than a width of the vertical ribs 23. The number of flow paths of the inter-rib flow paths 53 is increased to improve the cooling performance, and the rigidity of the inner case 21 is easily maintained even when the number of flow paths is increased.

The partition wall 25 extending in the motor axial direction is provided on the outer circumferential surface of the inner case 21, and the branching flow path 54 and the merging flow path 55 are adjacent to each other in the circumferential direction with the partition wall 25 interposed therebetween. The cooling water flows from the branching flow path 54 above the partition wall 25 to the merging flow path 55 below the partition wall 25 via the plurality of inter-rib flow paths 53, so that the motor 31 is cooled over the entire circumference. In the tubular portion 12 of the outer case 11 (see FIG. 1), the inlet 16 is formed on one end side in the motor axial direction, and the outlet 17 is formed on the other end side in the motor axial direction. The inlet 16 is connected to one end side of the branching flow path 54 in the motor axial direction, and the outlet 17 is connected to the other end side of the merging flow path 55 in the motor axial direction.

The partition wall 25 is formed in a crank shape so that a flow path width of the branching flow path 54 increases at a portion corresponding to the inlet 16 and a flow path width of the merging flow path 55 increases at a portion corresponding to the outlet 17. More specifically, a wide portion of the branching flow path 54 is adjacent to a narrow portion of the merging flow path 55 in the circumferential direction with the partition wall 25 interposed therebetween, and a narrow portion of the branching flow path 54 is adjacent to a wide portion of the merging flow path 55 in the circumferential direction with the partition wall 25 interposed therebetween. The flow path widths of the branching flow path 54 and the merging flow path 55 are widened in the vicinity of the inlet 16 and in the vicinity of the outlet 17, so that inflow and outflow of the cooling water are less likely to be inhibited even when the plurality of reinforcing ribs 26 are provided in the branching flow path 54 and the merging flow path 55.

The wide portion of the branching flow path 54 is adjacent to the narrow portion of the merging flow path 55 and the narrow portion of the branching flow path 54 is adjacent to the wide portion of the merging flow path 55, so that a total region of the branching flow path 54 and the merging flow path 55, that is, a formation region A1 of the plurality of reinforcing ribs 26 is narrowed in the circumferential direction. By narrowing the formation region A1 of the plurality of reinforcing ribs 26, the thickness difference of the inner case 21 is suppressed. The branching flow path 54 and the merging flow path 55 are formed point-symmetrically with respect to a center O of the partition wall 25. Shapes of the branching flow path 54 and the merging flow path 55 are symmetrical, and therefore, the stress concentration is relaxed. Deviation of the flow at the inlet 16 and the outlet 17 is reduced, and even when the partition wall 25 has a crank shape, the cooling water smoothly flows and the cooling performance is not impaired.

The flow path width of the merging flow path 55 is narrowed at a portion separated from the outlet 17 to one side in the motor axial direction, and the flow path width of the branching flow path 54 is narrowed at a portion separated from the inlet 16 to the other side in the motor axial direction. The narrow portion of the branching flow path 54 is located just beside the inlet 16, and the merging flow path 55 is located just beside the narrow portion of the outlet 17. The cooling water flows straight from the inlet 16 to the narrow portion of the branching flow path 54, and the cooling water flows straight from the narrow portion of the merging flow path 55 to the outlet 17. Therefore, even when the partition wall 25 has a crank shape, branching into the plurality of inter-rib flow paths 53 and merging from the plurality of inter-rib flow paths 53 are not inhibited.

As illustrated in FIG. 6, the plurality of cooling fins 42 are provided on the lower surface of the heat sink 41. The plurality of cooling fins 42 include the plurality of vertical fins 43 aligned in the motor axial direction and the plurality of transverse fins 44 aligned in a direction perpendicular to the motor axial direction. The plurality of vertical fins 43 extend along the plurality of vertical ribs 23, and the plurality of transverse fins 44 are orthogonal to the plurality of vertical fins 43. The plurality of inter-fin flow paths 56 are formed in the heat sink 41 as the cooling flow path 51. The cooling water flows along the vertical fins 43 by the plurality of inter-fin flow paths 56, and the inverter 39 (see FIG. 2) is cooled over the entire surface via the heat sink 41.

The plurality of vertical fins 43 are formed to be high from an intermediate portion to both ends in an extending direction thereof along the outer circumferential surface of the inner case 21 (see FIGS. 5A and 5B). The top surfaces of the plurality of vertical fins 43 are along the outer circumferential surface of the inner case 21, so that the heat sink 41 is brought close to the inner case 21 to reduce the size of the motor case 10. The plurality of vertical fins 43 and the plurality of transverse fins 44 are arranged in a lattice pattern, and the plurality of inter-fin flow paths 56 are partially blocked by the plurality of transverse fins 44. Intermittent portions of the plurality of inter-fin flow paths 56 communicate with the plurality of inter-rib flow paths 53 (see FIGS. 5A and 5B). The height of the plurality of transverse fins 44 is the same as the height of the plurality of vertical fins 43 at intersection with the vertical fins 43.

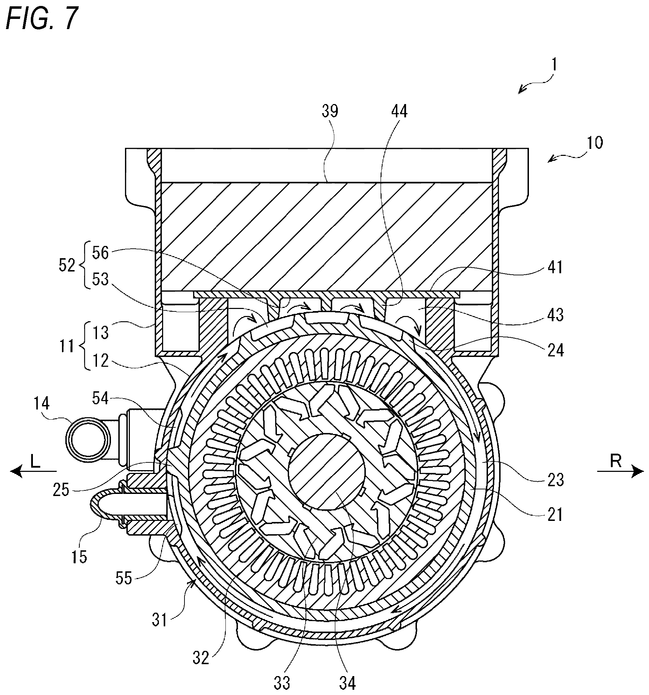

A cooling structure of the motor and the inverter will be described with reference to FIG. 7. FIG. 7 is a view illustrating the cooling structure of the motor and the inverter according to the present embodiment.

As illustrated in FIG. 7, between the motor 31 and the inverter 39, the opening in the upper portion of the outer case 11 is closed by the heat sink 41, and the upper portion of the inner case 21 and the heat sink 41 face each other. The motor 31 is installed inside the inner case 21, and the inverter 39 is installed on the heat sink 41. The plurality of vertical ribs 23 and the plurality of transverse ribs 24 protrude from the outer circumferential surface of the outer case 11, and the plurality of vertical fins 43 and the plurality of transverse fins 44 protrude from the lower surface of the heat sink 41. When viewed from the motor axial direction, the top surfaces of the plurality of vertical fins 43 and the plurality of transverse fins 44 are recessed in an arc shape along the top surfaces of the plurality of vertical ribs 23 and the plurality of transverse ribs 24.

The plurality of inter-rib flow paths 53 are formed by the plurality of vertical ribs 23 in the inner case 21, and the plurality of inter-fin flow paths 56 are formed by the plurality of vertical fins 43 in the heat sink 41. In the inner case 21, the plurality of inter-rib flow paths 53 are partially blocked by the plurality of transverse ribs 24. In the heat sink 41, the plurality of inter-fin flow paths 56 are partially blocked by the plurality of transverse fins 44. The plurality of transverse ribs 24 and the plurality of transverse fins 44 are alternately aligned in the circumferential direction. Between the inner case 21 and the heat sink 41, the common flow path 52 which is serpentine and in which the plurality of inter-rib flow paths 53 and the plurality of inter-fin flow paths 56 are connected is formed.

In addition, the top surfaces of the plurality of transverse ribs 24 are formed flush with the top surfaces of the plurality of vertical ribs 23, and the top surfaces of the plurality of transverse fins 44 are formed flush with the top surfaces of the plurality of vertical fins 43. The plurality of transverse ribs 24 are accommodated in the plurality of inter-rib flow paths 53, and the plurality of transverse ribs 24 do not enter the plurality of inter-fin flow paths 56 on the heat sink 41 side. The plurality of transverse fins 44 are accommodated in the plurality of inter-fin flow paths 56, and the plurality of transverse fins 44 do not enter the plurality of inter-rib flow paths 53 on the inner case 21 side. The heights of the plurality of transverse ribs 24 and the plurality of transverse fins 44 are suppressed, so that the pressure loss of the cooling water passing through the plurality of inter-rib flow paths 53 and the plurality of inter-fin flow paths 56 is reduced.

In a case where the cooling water enters the branching flow path 54 from the inlet pipe 14, the cooling water is branched from the branching flow path 54 into the plurality of inter-rib flow paths 53 (see FIG. 5A). In the plurality of inter-rib flow paths 53, the cooling water flows along the plurality of vertical ribs 23. In the upper portion of the inner case 21, the plurality of inter-rib flow paths 53 and the plurality of inter-fin flow paths 56 are connected. The cooling water is guided from the plurality of inter-rib flow paths 53 to the plurality of inter-fin flow paths 56 by the plurality of transverse ribs 24, and the cooling water is guided from the plurality of inter-fin flow paths 56 to the plurality of inter-rib flow paths 53 by the plurality of transverse fins 44, allowing the cooling water to flow between the inner case 21 side and the heat sink 41 side.

A contact area between the inner case 21 and the cooling water is increased by the plurality of vertical ribs 23 and the plurality of transverse ribs 24, and a contact area between the heat sink 41 and the cooling water is increased by the plurality of vertical fins 43 and the plurality of transverse fins 44. The heat of the motor 31 is conducted to the inner case 21 and is dissipated into the cooling water from the plurality of vertical ribs 23 and the plurality of transverse ribs 24 to cool the motor 31. The heat of the inverter 39 is conducted to the heat sink 41 and dissipated into the cooling water from the plurality of vertical fins 43 and the plurality of transverse fins 44 to cool the inverter 39. The branching flow path 54 is closer to the heat sink 41 than the merging flow path 55, and the inverter 39 is cooled by the cooling water immediately after the flow.

The cooling water passes below the heat sink 41, and the cooling water passes through the plurality of inter-rib flow paths 53 around the inner case 21, so that the motor 31 is cooled as a whole. Then, the cooling water flows into the merging flow path 55 from the plurality of inter-rib flow paths 53, and the cooling water merged in the merging flow path 55 is discharged to the outlet pipe 15 (see FIG. 5A). The cooling water flows in one direction from the branching flow path 54 to the merging flow path 55 without branching into the plurality of inter-rib flow paths 53 and the plurality of inter-fin flow paths 56, so that the cooling water flows smoothly with little pressure loss in the plurality of inter-rib flow paths 53, which improves the cooling performance of the motor 31 and the inverter 39.

As described above, with the inverter-integrated motor 1 according to the present embodiment, the common flow path 52 is formed between the inner case 21 and the heat sink 41, so that the motor 31 and the inverter 39 can be brought close to each other to reduce the size of the motor case 10. In addition, the cooling water flows through the common flow path 52, so that the heat of the motor 31 is conducted to the inner case 21 and dissipated into the cooling water from the plurality of cooling ribs 22, and the heat of the inverter 39 is conducted to the heat sink 41 and dissipated into the cooling water from the plurality of cooling fins 42, which improves the cooling performance of the motor 31 and the inverter 39.

In the present embodiment, an outer case includes a tubular portion and a box-shaped portion, but the outer case may be formed to be able to accommodate an inner case.

In the present embodiment, a plurality of vertical ribs and a plurality of transverse ribs are provided on an outer circumferential surface of the inner case as a plurality of cooling ribs, but it suffices as long as a plurality of ribs are provided on the outer circumferential surface of the inner case. For example, only the vertical ribs or the transverse ribs may be provided on the outer circumferential surface of the inner case as the plurality of cooling ribs.

In the present embodiment, a plurality of vertical fins and a plurality of transverse fins are provided on a lower surface of the heat sink as a plurality of cooling fins, but it suffices as long as a plurality of fins are provided on the lower surface of the heat sink. For example, only the vertical fins or the transverse fins may be provided on the lower surface of the heat sink as the plurality of cooling fins.

In the present embodiment, top surfaces of the plurality of transverse ribs are formed flush with top surfaces of the plurality of vertical ribs, but the top surfaces of the plurality of transverse ribs may be formed lower than the top surfaces of the plurality of vertical ribs so that the plurality of transverse ribs are accommodated in a plurality of inter-rib flow paths.

In the present embodiment, top surfaces of the plurality of transverse fins are formed flush with top surfaces of the plurality of vertical fins, but the top surfaces of the plurality of transverse fins may be formed lower than the top surfaces of the plurality of vertical fins so that the plurality of transverse fins are accommodated in a plurality of inter-fin flow paths.

In the present embodiment, the plurality of vertical fins are formed to be high from an intermediate portion to both ends in an extending direction thereof along the outer circumferential surface of the inner case, but the shape of the plurality of vertical fins is not particularly limited.

The inverter-integrated motor according to the present embodiment is not limited to a vehicle, and may be employed in another device.

As described above, according to a first aspect, a motor case (10) in which an inner case (21) is accommodated inside an outer case (11), a motor (31) installed inside the inner case and having a motor shaft (34) protruding outside the case, an inverter (39) installed inside the outer case and configured to control rotation of the motor, and a heat sink (41) installed inside the outer case and configured to cool the inverter are included. A plurality of cooling ribs (22) are provided on an outer circumferential surface of the inner case, and a plurality of cooling fins (42) are provided on a lower surface of the heat sink, and the lower surface of the heat sink faces the outer circumferential surface of the inner case, and a common flow path (52) is formed by the plurality of cooling ribs and the plurality of cooling fins. With this configuration, the common flow path is formed between the inner case and the heat sink, so that the motor and the inverter can be brought close to each other to reduce the size of the motor case. In addition, cooling water flows through the common flow path, so that heat of the motor is conducted to the inner case and is dissipated into the cooling water through the plurality of cooling ribs, and heat of the inverter is conducted to the heat sink and dissipated into the cooling water through the plurality of cooling fins, which improves the cooling performance of the motor and the inverter.

According to a second aspect, in the first aspect, the common flow path is divided into a plurality of inter-rib flow paths (53) on an inner case side and a plurality of inter-fin flow paths (56) on a heat sink side. With this configuration, the cooling performance of the motor and the inverter is adjusted by heights of the plurality of cooling ribs and the plurality of cooling fins, a height dimension of the flow path does not become larger than necessary, and the size of the motor case can be reduced.

According to a third aspect, in the first aspect or the second aspect, the plurality of cooling ribs include a plurality of vertical ribs (23) aligned in a motor axial direction and extending in a circumferential direction, and the plurality of cooling fins includes a plurality of vertical fins (43) aligned in the motor axial direction and extending along the plurality of vertical ribs. With this configuration, the motor can be cooled over the entire circumference, and the inverter can be cooled over the entire surface. The cooling water flows in one direction, so that the pressure loss can be reduced and the cooling performance of the motor and the inverter can be improved.

According to a fourth aspect, in the third aspect, the plurality of vertical ribs are formed to have a constant height, and the plurality of vertical fins are formed to be high from an intermediate portion to both ends in an extending direction thereof along the outer circumferential surface of the inner case. With this configuration, top surfaces of the vertical fins are along the outer circumferential surface of the inner case, so that the heat sink can be brought close to the inner case to reduce the size of the motor case. In addition, the height of the vertical rib is constant, so that a flow path cross-sectional area around the motor is constant, and cooling of the motor with a large amount of heat is stabilized.

According to a fifth aspect, in the third aspect or the fourth aspect, the plurality of cooling ribs include a plurality of transverse ribs (24) orthogonal to the plurality of vertical ribs, the plurality of cooling fins include a plurality of transverse fins (44) orthogonal to the plurality of vertical fins, and the plurality of transverse ribs and the plurality of transverse fins are alternately aligned in the circumferential direction. With this configuration, the cooling water flows between the inner case side and the inverter side. A contact area between the inner case and the cooling water is increased by the plurality of vertical ribs and the plurality of transverse ribs, and a contact area between the heat sink and the cooling water is increased by the plurality of vertical fins and the plurality of transverse fins, thereby improving the cooling performance of the motor and the inverter.

According to a sixth aspect, in the fifth aspect, a plurality of inter-rib flow paths are formed between the plurality of vertical ribs, and a plurality of inter-fin flow paths are formed between the plurality of vertical fins, and the plurality of transverse ribs are accommodated in the plurality of inter-rib flow paths, and the plurality of transverse fins are accommodated in the plurality of inter-fin flow paths. With this configuration, the pressure loss of the cooling water passing through the common flow path is suppressed. In addition, the motor and the inverter are brought close to each other to suppress an increase in the size of the motor case.

Although the present embodiment has been described, a part or all of the embodiment and modifications described above may be combined as another embodiment.

Further, the present invention may be implemented by other methods as long as the technical concept can be implemented by the methods through advance of the technique or other derivative techniques. Therefore, the claims cover all embodiments that may fall within the scope of the technical concept.

### REFERENCE SIGNS LIST

1: inverter-integrated motor
10: motor case
11: outer case
21: inner case
22: cooling rib
23: vertical rib
24: transverse rib
31: motor
39: inverter
41: heat sink
42: cooling fin
43: vertical fin
44: transverse fin
51: cooling flow path
52: common flow path
53: inter-rib flow path
56: inter-fin flow path

## Claims

1. An inverter-integrated motor (1) comprising:
a motor case (10) in which an inner case (21) is accommodated inside an outer case (11);
a motor (31) installed inside the inner case and having a motor shaft (34) protruding outside the case;
an inverter (39) installed inside the outer case and configured to control rotation of the motor; and
a heat sink (41) installed inside the outer case and configured to cool the inverter, wherein
a plurality of cooling ribs (22) are provided on an outer circumferential surface of the inner case, and a plurality of cooling fins (42) are provided on a lower surface of the heat sink,
the plurality of cooling ribs (22) include a plurality of vertical ribs (23) aligned in a motor axial direction and extending in a circumferential direction,
the plurality of cooling fins (42) include a plurality of vertical fins (43) aligned in the motor axial direction and extending along the plurality of vertical ribs (23),
the plurality of cooling ribs (22) include a plurality of transverse ribs (24) orthogonal to the plurality of vertical ribs (23),
the plurality of cooling fins (42) include a plurality of transverse fins (44) orthogonal to the plurality of vertical fins (43),
the plurality of transverse ribs (24) and the plurality of transverse fins (44) are alternately aligned in the circumferential direction, and
the lower surface of the heat sink faces the outer circumferential surface of the inner case, and a common flow path (52) is formed by the plurality of cooling ribs (22) and the plurality of cooling fins (42).

2. The inverter-integrated motor (1) according to claim 1, wherein
the common flow path (52) is divided into a plurality of inter-rib flow paths (53) on an inner case side and a plurality of inter-fin flow paths (56) on a heat sink side.

3. The inverter-integrated motor (1) according to claim 1, wherein
the plurality of vertical ribs (23) are formed to have a constant height, and the plurality of vertical fins (43) are formed to be higher from an intermediate portion toward both ends in an extending direction thereof along the outer circumferential surface of the inner case.

4. The inverter-integrated motor (1) according to claim 1, wherein
a plurality of inter-rib flow paths (53) are formed between the plurality of vertical ribs (23), and a plurality of inter-fin flow paths (56) are formed between the plurality of vertical fins (43), and
the plurality of transverse ribs (24) are accommodated in the plurality of inter-rib flow paths (53), and the plurality of transverse fins (44) are accommodated in the plurality of inter-fin flow paths (56).

## Patentansprüche

1. Wechselrichterintegrierter Motor (1), umfassend:
ein Motorgehäuse (10), in welchem ein Innengehäuse (21) innerhalb eines Außengehäuses (11) aufgenommen ist;
einen Motor (31), der innerhalb des Innengehäuses installiert ist und eine Motorwelle (34) aufweist, die außerhalb des Gehäuses hervorsteht;
einen Wechselrichter (39), der innerhalb des Außengehäuses installiert und konfiguriert ist, eine Drehung des Motors zu steuern; und
einen Kühlkörper (41), der innerhalb des Außengehäuses installiert und konfiguriert ist, den Wechselrichter zu kühlen, wobei
eine Vielzahl von Kühlrippen (22) auf einer Außenumfangsfläche des Innengehäuses bereitgestellt sind und eine Vielzahl von Kühllamellen (42) auf einer Unterseite des Kühlkörpers bereitgestellt sind,
die Vielzahl von Kühlrippen (22) eine Vielzahl von Vertikalrippen (23) beinhalten, die in einer Motoraxialrichtung ausgerichtet sind und sich in einer Umfangsrichtung erstrecken,
die Vielzahl von Kühllamellen (42) eine Vielzahl von Vertikallamellen (43) beinhalten, die in der Motoraxialrichtung ausgerichtet sind und sich entlang der Vielzahl von Vertikalrippen (23) erstrecken,
die Vielzahl von Kühlrippen (22) eine Vielzahl von Querrippen (24) beinhalten, die orthogonal zu der Vielzahl von Vertikalrippen (23) sind,
die Vielzahl von Kühllamellen (42) eine Vielzahl von Querlamellen (44) beinhalten, die orthogonal zu der Vielzahl von Vertikallamellen (43) sind,
die Vielzahl von Querrippen (24) und die Vielzahl von Querlamellen (44) abwechselnd in der Umfangsrichtung ausgerichtet sind, und
die Unterseite des Kühlkörpers der Außenumfangsfläche des Innengehäuses zugewandt ist und ein gemeinsamer Strömungsweg (52) durch die Vielzahl von Kühlrippen (22) und die Vielzahl von Kühllamellen (42) gebildet ist.

2. Wechselrichterintegrierter Motor (1) nach Anspruch 1, wobei
der gemeinsame Strömungsweg (52) in eine Vielzahl von Zwischenrippenströmungswegen (53) auf einer Innengehäuseseite und eine Vielzahl von Zwischenlamellenströmungswegen (56) auf einer Kühlkörperseite unterteilt ist.

3. Wechselrichterintegrierter Motor (1) nach Anspruch 1, wobei
die Vielzahl von Vertikalrippen (23) ausgebildet sind, eine konstante Höhe aufzuweisen, und die Vielzahl von Vertikallamellen (43) ausgebildet sind, von einem Zwischenabschnitt zu beiden Enden in einer Erstreckungsrichtung davon entlang der Außenumfangsfläche des Innengehäuses höher zu sein.

4. Wechselrichterintegrierter Motor (1) nach Anspruch 1, wobei
eine Vielzahl von Zwischenrippenströmungswegen (53) zwischen der Vielzahl von Vertikalrippen (23) gebildet sind und eine Vielzahl von Zwischenlamellenströmungswegen (56) zwischen der Vielzahl von Vertikallamellen (43) gebildet sind, und
die Vielzahl von Querrippen (24) in der Vielzahl von Zwischenrippenströmungswegen (53) aufgenommen sind und die Vielzahl von Querlamellen (44) in der Vielzahl von Zwischenlamellenströmungswegen (56) aufgenommen sind.

## Revendications

1. Moteur à onduleur intégré (1) comprenant :
un carter de moteur (10) dans lequel un carter interne (21) est logé à l'intérieur d'un carter externe (11) ;
un moteur (31) installé à l'intérieur du carter interne et ayant un arbre de moteur (34) faisant saillie à l'extérieur du carter ;
un onduleur (39) installé à l'intérieur du carter externe et configuré pour commander la rotation du moteur ; et
un dissipateur thermique (41) installé à l'intérieur du carter externe et configuré pour refroidir l'onduleur, dans lequel
une pluralité de nervures de refroidissement (22) sont prévues sur une surface circonférentielle externe du carter interne, et une pluralité d'ailettes de refroidissement (42) sont prévues sur une surface inférieure du dissipateur thermique,
la pluralité de nervures de refroidissement (22) comportent une pluralité de nervures verticales (23) alignées dans une direction axiale de moteur et s'étendant dans une direction circonférentielle,
la pluralité d'ailettes de refroidissement (42) comportent une pluralité d'ailettes verticales (43) alignées dans la direction axiale de moteur et s'étendant le long de la pluralité de nervures verticales (23),
la pluralité de nervures de refroidissement (22) comportent une pluralité de nervures transversales (24) orthogonales à la pluralité de nervures verticales (23),
la pluralité d'ailettes de refroidissement (42) comportent une pluralité d'ailettes transversales (44) orthogonales à la pluralité d'ailettes verticales (43),
la pluralité de nervures transversales (24) et la pluralité d'ailettes transversales (44) sont alignées alternativement dans la direction circonférentielle, et
la surface inférieure du dissipateur thermique fait face à la surface circonférentielle externe du carter interne, et un chemin d'écoulement commun (52) est formé par la pluralité de nervures de refroidissement (22) et la pluralité d'ailettes de refroidissement (42).

2. Moteur à onduleur intégré (1) selon la revendication 1, dans lequel
le chemin d'écoulement commun (52) est divisé en une pluralité de chemins d'écoulement inter-nervures (53) du côté du carter interne et en une pluralité de chemins d'écoulement inter-ailettes (56) du côté du dissipateur thermique.

3. Moteur à onduleur intégré (1) selon la revendication 1, dans lequel
la pluralité de nervures verticales (23) sont formées de sorte à avoir une hauteur constante, et la pluralité d'ailettes verticales (43) sont formées de sorte à être plus hautes à partir d'une partie intermédiaire vers les deux extrémités dans une direction d'extension associée le long de la surface circonférentielle externe du carter interne.

4. Moteur à onduleur intégré (1) selon la revendication 1, dans lequel
une pluralité de chemins d'écoulement inter-nervures (53) sont formés entre la pluralité de nervures verticales (23), et une pluralité de chemins d'écoulement inter-ailettes (56) sont formés entre la pluralité d'ailettes verticales (43), et
la pluralité de nervures transversales (24) sont logées dans la pluralité de chemins d'écoulement inter-nervures (53), et la pluralité d'ailettes transversales (44) sont logées dans la pluralité de chemins d'écoulement inter-ailettes (56).
